# EUROPEAN PATENT SPECIFICATION

(11) **EP 3 354 461 B1**
(45) Date of publication and mention of the grant of the patent: **26.08.2020**
(21) Application number: 18152058.6
(22) Date of filing: 17.01.2018
(51) Int. Cl.: B41J 2/045, B41J 2/14

(54) **LIQUID INJECTION APPARATUS, DRIVING METHOD OF LIQUID INJECTION APPARATUS AND LIQUID SUPPLY APPARATUS**
FLÜSSIGKEITSEINSPRITZUNGSVORRICHTUNG, ANSTEUERUNGSVERFAHREN DER FLÜSSIGKEITSEINSPRITZUNGSVORRICHTUNG UND FLÜSSIGKEITSVERSORGUNGSVORRICHTUNG
APPAREIL D'INJECTION DE LIQUIDE, PROCÉDÉ DE COMMANDE D'UN APPAREIL D'INJECTION DE LIQUIDE ET APPAREIL D'ALIMENTATION EN LIQUIDE

(30) Priority: 25.01.2017 JP 2017011313
(43) Date of publication of application: 01.08.2018
(73) Proprietor: Toshiba TEC Kabushiki Kaisha, Tokyo 141-0032 (JP)
(72) Inventor: Kusunoki, Ryutaro, Tokyo, 141-8562 (JP)
(74) Representative: Hoffmann Eitle

(56) References cited:
- EP-A1- 1 902 841
- US-A1- 2004 189 752

## Description

### FIELD

Embodiments described herein relate generally to an inkjet recording apparatus including a liquid injection apparatus for changing a volume of a pressure chamber in which ink is filled to eject ink droplet from a nozzle communicating with the pressure chamber.

### BACKGROUND

A liquid injection apparatus can supply a small amount of liquid droplets to a necessary place by a necessary amount. For example, such liquid injection apparatus may be an inkjet printer, a dispensing device, a 3D printer, or the like. The inkjet printer attaches the ink droplets to a desired position on a medium such as a paper to form an image and a letter. The inkjet printer includes an inkjet head which ejects the ink droplet according to print data. The dispensing device supplies reagent to a predetermined container by a predetermined amount in a drug discovery and a biotechnology field. The 3D printer realizes stereoscopic printing by supplying liquid resin to a predetermined place by a predetermined amount at a predetermined time. Each of the inkjet printer, the dispensing device, and the 3D printer has the liquid injection apparatus which injects a small amount of the liquid droplets according to the control data. The inkjet head is also one of the liquid injection apparatus.

A conventional inkjet head may comprise a structure having a base plate on which an ink pressure chamber is formed, a vibration plate laminated on the base plate, and a piezoelectric element formed on the vibration plate. A piezoelectric body of a thin film tends to deteriorate as a high voltage is continuously applied for a long time. The deterioration of the piezoelectric body shortens the lifetime of the inkjet head.

EP 1 902 841 A1 (KYOCERA CORPORATION [JP], 26 March 2008) relates to a method for driving a liquid ejector, which is provided with a piezoelectric actuator including a piezoelectric ceramic layer having a size covering a plurality of pressurizing chambers. An arbitrary piezoelectric deformation region of the liquid ejector is deflected in one thickness direction and the opposite direction individually by applying a driving voltage waveform including a first voltage (-V_{L}) and an equivalent second voltage (+V_{L}) of the opposite polarity in order to vary the volume of the pressurizing chambers of a corresponding liquid droplet ejecting portion, and a liquid droplet is ejected through a communicating nozzle. Since gradual creep deformation of the inactive region of the piezoelectric ceramic layer is prevented, the ink droplet ejection performance is maintained at a good level over a long period.

### SUMMARY OF THE INVENTION

One of the objects of the present invention is to improve prior art techniques and overcome at least some of the prior art problems as for instance above illustrated. The invention is defined in the claims.

According to a first aspect of the present invention, it is provided a driving method of a liquid injection apparatus comprising a base plate on which a pressure chamber communicating with a nozzle which ejects liquid is formed, a piezoelectric body arranged corresponding to the pressure chamber and contracting in a direction orthogonal to a thickness direction by applying a voltage, and a volume variable plate arranged between the pressure chamber and the piezoelectric body and changing a volume of the pressure chamber by applying a voltage to the piezoelectric body, the method comprising:
(1) applying a first voltage to the piezoelectric body in a rest period before the liquid is ejected from the nozzle;
(2) applying a second voltage higher than the first voltage to the piezoelectric body to reduce the volume of the pressure chamber by contracting the piezoelectric body in a standby period before the liquid is ejected from the nozzle, wherein the rest period (71) is arranged before the standby period (72);
(3) applying the second voltage to the piezoelectric body after applying a third voltage lower than the second voltage to the piezoelectric body, in a printing period, to eject the liquid from the nozzle; and
switching the first step, the second step and the third step according to ejection data indicating whether to eject the liquid.

According to a second aspect of the present invention, it is provided a liquid injection apparatus, comprising:
a base plate on which a pressure chamber communicating with a nozzle which ejects liquid is formed;
a piezoelectric body, arranged corresponding to the pressure chamber, configured to contract in a direction orthogonal to a thickness direction by applying a voltage;
a volume variable plate, arranged between the pressure chamber and the piezoelectric body, configured to change a volume of the pressure chamber by applying a voltage to the piezoelectric body; and
a drive circuit configured to generate an electrical signal comprising a first voltage in a rest state before the liquid is ejected from the nozzle, a second voltage in a standby state which is higher than the first voltage for contracting the piezoelectric body before the liquid is ejected from the nozzle, and a third voltage lower than the second voltage for ejecting the liquid from the nozzle, wherein the rest period (71) is arranged before the standby period (72), and to switch the first voltage, the second voltage and the third voltage and to apply them to the piezoelectric body according to ejection data indicating whether to eject the liquid.

According to a third aspect of the present invention, it is provided a liquid supply apparatus, comprising:
a liquid injection apparatus (2) according to any of claims 12 to 14 ;
a memory configured to store the ejection data;
a control circuit configured to generate a signal for switching the first voltage, the second voltage and the third voltage based on the ejection data stored in the memory; and
a conveyance device configured to convey a medium for receiving the liquid ejected from the liquid injection apparatus.

### BRIEF DESCRIPTION OF THE DRAWINGS

Fig. 1 is a side view schematically illustrating an inkjet printer according to a first embodiment;
Fig. 2 is a perspective view illustrating an inkjet head according to the first embodiment;
Fig. 3 is a plan view of a flow path base plate obtained by viewing an inkjet head from an ink ejection port side according to the first embodiment;
Fig. 4 is a detail view of an actuator of the flow path base plate in Fig. 3;
Fig. 5 is a cross-sectional view of an A-A part of the actuator shown in Fig. 4;
Fig. 6 is a diagram illustrating a circuit constitution for driving the inkjet printer according to the first embodiment;
Fig. 7 is a diagram illustrating a voltage waveform for operating the inkjet head, pressure, flow velocity, change in meniscus position and a state of ink ejection according to the first embodiment;
Fig. 8 is a diagram illustrating the voltage waveform for operating the inkjet head according to the first embodiment;
Fig. 9 is a diagram illustrating a circuit constitution for driving an inkjet printer according to a second embodiment;
Fig. 10 is a diagram illustrating a voltage waveform for operating an inkjet head according to a third embodiment;
Fig. 11 is a diagram illustrating a voltage waveform for operating an inkjet head according to a fourth embodiment;
Fig. 12 is a diagram illustrating a voltage waveform for operating an inkjet head according to a fifth embodiment; and
Fig. 13 is a schematic view of a liquid dispensing apparatus according to a sixth embodiment.

### DETAILED DESCRIPTION

A method for driving a liquid injection apparatus according to an embodiment of the present invention comprising a base plate on which a pressure chamber communicating with a nozzle which ejects liquid is formed, a piezoelectric body arranged corresponding to the pressure chamber and contracting in a direction orthogonal to a thickness direction by applying a voltage, and a volume variable plate arranged between the pressure chamber and the piezoelectric body and changing a volume of the pressure chamber by applying a voltage to the piezoelectric body, includes a first step of applying a first voltage to the piezoelectric body in a rest period before the liquid is ejected from the nozzle; a second step of applying a second voltage higher than the first voltage to the piezoelectric body to reduce the volume of the pressure chamber by contracting the piezoelectric body in a standby period before the liquid is ejected from the nozzle, wherein the rest period (71) is arranged before the standby period (72); a third step of applying the second voltage to the piezoelectric body after applying a third voltage lower than the second voltage to the piezoelectric body to eject the liquid from the nozzle; and a switching step of switching the first step, the second step and the third step according to ejection data indicating whether to eject the liquid.

An image receiving medium is a plain paper, an art paper, a coated paper, and the like. The image receiving medium other than the paper is a cloth, a vinyl chloride resin film, a plastic film, ceramics and the like.

An ink is obtained by dissolving or dispersing a dye or a pigment as a colorant in a solvent. As the ink solvent, there is water, oil, solvent and the like. Further, the ink also includes transparent liquid ejected by a liquid injection apparatus. The transparent liquid is used to form an underlayer for image formation and a protective layer. The underlayer is formed on the image receiving medium before the ink containing the colorant is attached to improve a color developing property of the attached ink. The protective layer is formed on the formed ink layer after the ink containing the colorant is attached to the image receiving medium. In addition to the ink, liquid flying in the liquid injection apparatus also includes reagent and pharmaceuticals used in a drug discovery and a biotechnology field, liquid resin used in a 3D printer and the like.

Hereinafter, an embodiment is described with reference to the accompanying drawings. In the drawings, the same reference numeral indicates the same component.

As a liquid injection apparatus, an inkjet head is exemplified. An inkjet printer is exemplified as a liquid ejection recording apparatus loaded with the liquid injection apparatus.

### (First Embodiment)

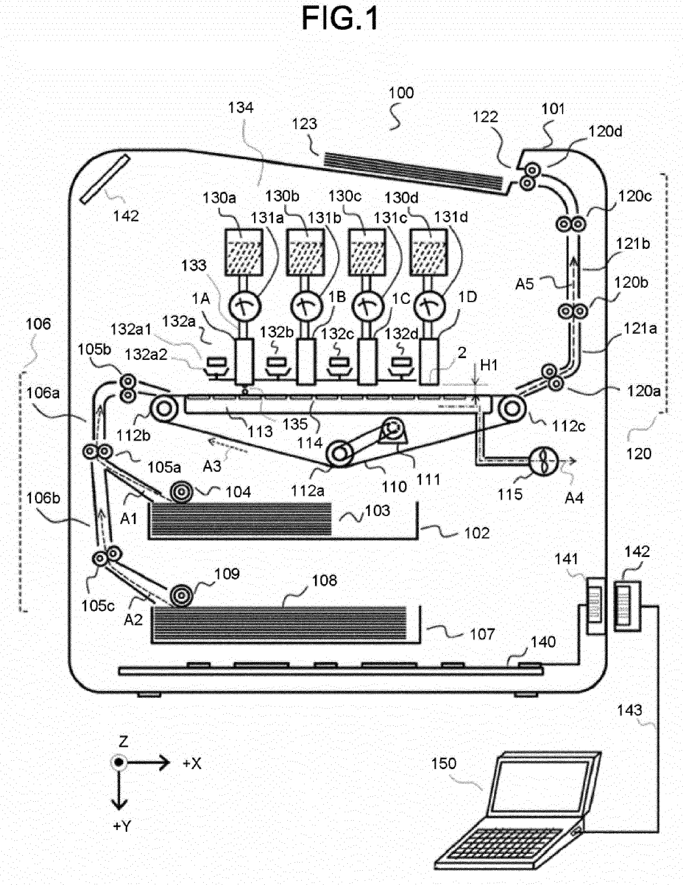

Fig. 1 shows a cross section of an inkjet printer 100 loaded with inkjet heads (1A, 1B, 1C and 1D) according to the embodiment. A computer 150 generates print data for forming an image on image receiving media 103 and 108. The print data is input to the inkjet printer 100 through a cable 143 and connectors 141 and 142. The inkjet heads 1A to 1D (printing section 134) eject cyan ink, magenta ink, yellow ink, and black ink respectively to record images on the image receiving media (papers 103 and 108) according to print data. A Y axis direction indicates a direction of gravity. A direction in which ink is ejected is set as positive, and is recorded as +Y axis.

The inkjet printer 100 has a box-shaped housing 101. Paper feed cassettes 102 and 107, an upstream conveyance path 106, a conveyance belt 110, the printing section 134, a downstream conveyance path 120, and a paper discharge tray 123 are arranged in this order inside the housing 101 in a direction from the lower side to the upper side of the Y axis direction. The inkjet printer 100 further includes a display device 142 and a control substrate 140. The inkjet heads 1A to 1D eject the ink droplets onto the papers 103 and 108 held on the conveyance belt 110 to record an image.

The paper feed cassette 102 accommodates a plurality of A4 size papers 103. The paper feed cassette 107 accommodates a plurality of A3 size papers 108. The inkjet printer 100 forms an image with the ink on two kinds of papers in the paper feed cassette 102 and the paper feed cassette 107. The paper feed cassette 102 and the paper feed cassette 107 are arranged at the bottom of the housing 101.

A paper feed roller 104 feeds papers 103 one by one from the paper feed cassette 102 to the upstream conveyance path 106. The upstream conveyance path 106 is composed of feed roller pairs 105a, 105b and 105c and paper guide plates 106a and 106b for regulating a conveyance direction of the papers 103 and 108. The paper 103 is conveyed by the rotation of the feed roller pairs 105a and 105b, and after passing through the feed roller pair 105a, the paper 103 is sent to an outer peripheral surface of the conveyance belt 110 by the paper guide plate 106a. An arrow A1 indicated by a broken line in Fig. 1 indicates a guide route of the paper 103.

The paper feed roller 109 feeds papers 108 one by one from the paper feed cassette 107 to the upstream conveyance path 106. The paper 108 is conveyed by the rotation of the feed roller pairs 105c, 105a and 105b, and after passing through the feed roller pair 105c, the paper 108 is sent to the outer peripheral surface of the conveyance belt 110 by the paper guide plates 106a and 106b. An arrow A2 indicated by a broken line in Fig. 1 indicates a guide route of the paper 108.

The conveyance belt 110 is an endless belt with fine holes formed through the front and back surfaces which is knitted into a mesh shape. The conveyance belt 110 has a width (width in a Z axis direction) greater than that of the conveyed paper. In the present embodiment, the width becomes 330 mm for conveying A3 paper. The conveyance belt 110 is rotatably supported without looseness by three rollers including a driving roller 112a and driven rollers 112b and 112c. The driving roller 112a rotates in an A3 direction by a motor 111 and rotates the conveyance belt 110 at a predetermined peripheral speed. In contact with an inner surface of the conveyance belt 110, a negative pressure container 113 is arranged. An upper surface in the Y axis direction of the negative pressure container 113 is in contact with the inner surface of the conveyance belt 110. On the upper surface of the negative pressure container 113, a large number of fine holes 114 are formed. The negative pressure container 113 communicates with a fan 115 that depressurizes the inside of the container. Due to the rotation of the fan 115, an air current is generated as indicated by an arrow A4, and the inside of the negative pressure container 113 is depressurized. By decompression, the papers 103 and 108 are attached to the upper surface of the conveyance belt 110 through the fine holes formed in the conveyance belt 110. Due to the rotation of the conveyance belt 110, the papers 103 and 108 attached to the conveyance belt 110 pass through the lower side of the printing section 134 and are conveyed in an X axis direction. Thereafter, the papers 103 and 108 are conveyed to the downstream conveyance section 120.

The printing section 134 includes an inkjet head 1A for ejecting the cyan ink, an inkjet head 1B for ejecting the magenta ink, an inkjet head 1C for ejecting the yellow ink, and an inkjet head 1D for ejecting the black ink. The printing section 134 further includes an ink supply pressure adjustment device 131a for operating the inkjet head 1A, an ink tank 130a, and a maintenance unit 132a. The maintenance unit 132a includes a cap 132a2 for protecting the surface of an ink ejection nozzle of the inkjet head 1A and a blade 132a1 for removing deposits remaining on the nozzle surface. Similarly, the printing section 134 includes an ink supply pressure adjustment device 131b for operating the inkjet head 1B, an ink tank 130b, and a maintenance unit 132b. The printing section 134 includes an ink supply pressure adjustment device 131c for operating the inkjet head 1C, an ink tank 130c, and a maintenance unit 132c. The printing section 134 includes an ink supply pressure adjustment device 131d for operating the inkjet head 1D, an ink tank 130d, and a maintenance unit 132d. The maintenance units 132b, 132c and 132d have the same caps and blades as the cap 132a2 and the blade 132a1.

The ink ejection surfaces of the inkjet heads 1A to 1D are fixed in the inkjet printer 100 at a distance H1 from the upper surface of the conveyance belt 110. H1 is 1 mm. Each of the inkjet heads 1A to 1D is long in a width direction (main scanning direction) of the conveyance belt 110 and short in a rotation direction (sub-scanning direction) of the conveyance belt 110, and the inkjet heads 1A to 1D are arranged at an interval in the rotation direction of the conveyance belt 110. The inkjet heads 1A to 1D are formed to have a length of 297 mm in the paper width direction. In the present embodiment, small heads having a width of 30 mm are arranged in a staggered manner to form an inkjet head of 297 mm. The inkjet heads 1A to 1D have the same structure except the color of ejected ink. The detailed structures of the inkjet heads 1A to 1D are described later.

The ink tank 130a is an ink container for storing cyan ink. The ink tank 130a is arranged above the inkjet head 1A in the Y axis direction.

In the Y axis direction, the ink tank 130a is arranged above the inkjet head 1A, and the inkjet head 1A ejects the ink droplet 135 downward. Since it is necessary to prevent the cyan ink from leaking from the inkjet head 1A at the standby time, it is necessary to maintain the ink in the inkjet head 1A at a negative pressure with respect to the atmospheric pressure. The ink supply pressure adjustment device 131a is arranged between the ink tank 130a and the inkjet head 1A in the Y axis direction and maintains the ink in the inkjet head 1A at the negative pressure with respect to the atmospheric pressure. The negative pressure is set to -1 kPa. The ink is supplied to the inkjet head 1A from the ink supply pressure adjustment device 131a through an ink supply pipe 133 of the inkjet head 1A. The ink supply pipe 133 is a resin tube. The inkjet heads 1B-1D also have the same ink tanks 130b, 130c and 130d and ink supply pressure adjustment devices 131b, 131c and 131d,respectively.

The papers 103 and 108 on which images are formed are separated from the conveyance belt 110 and sent to a feed roller pair 120a. The downstream conveyance path 120 is composed of feed roller pairs 120a, 120b, 120c and 120d and paper guide plates 121a and 121b for regulating the conveyance direction of the papers 103 and 108. The papers 103 and 108 are discharged from a paper discharge port 122 to the paper discharge tray 123 by the feed roller pairs 120a, 120b, 120c and 120d along an arrow A5 indicated by a broken line in Fig. 1.

The structure of the inkjet head 1A is described in detail. As described above, the inkjet heads 1B-1D have the same structures as 1A.

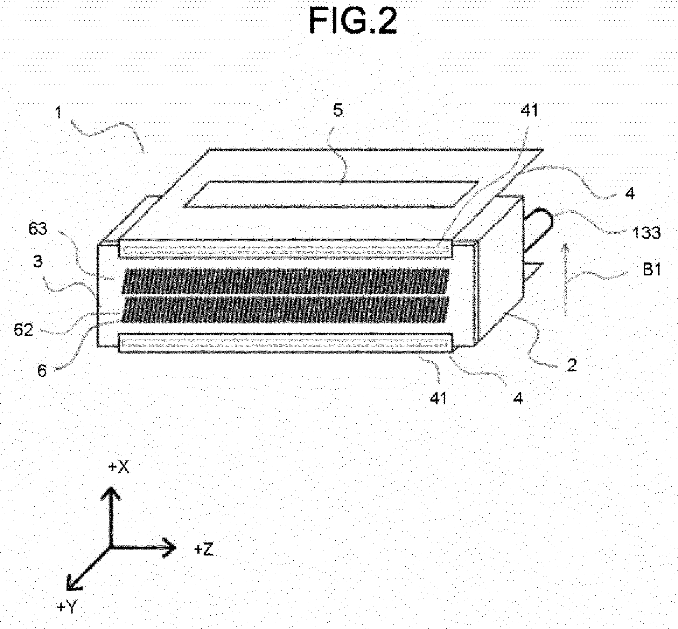

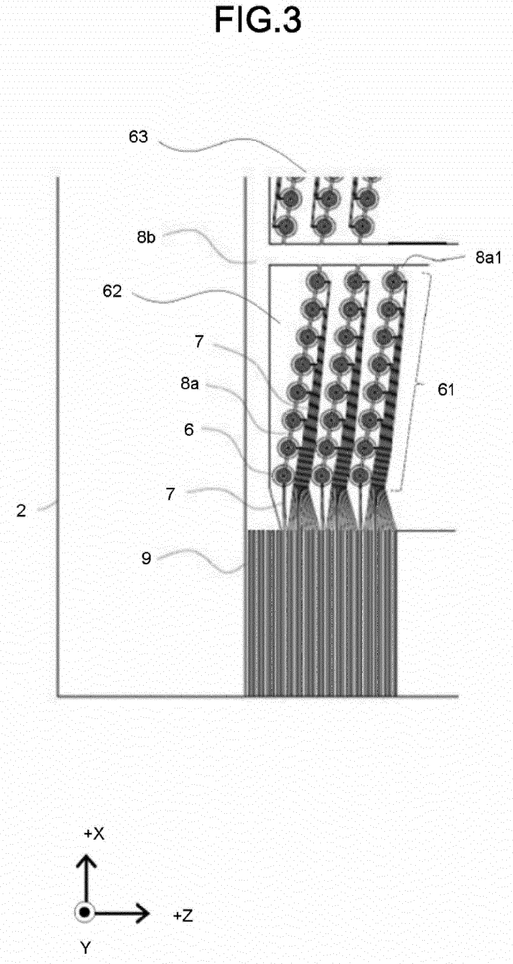

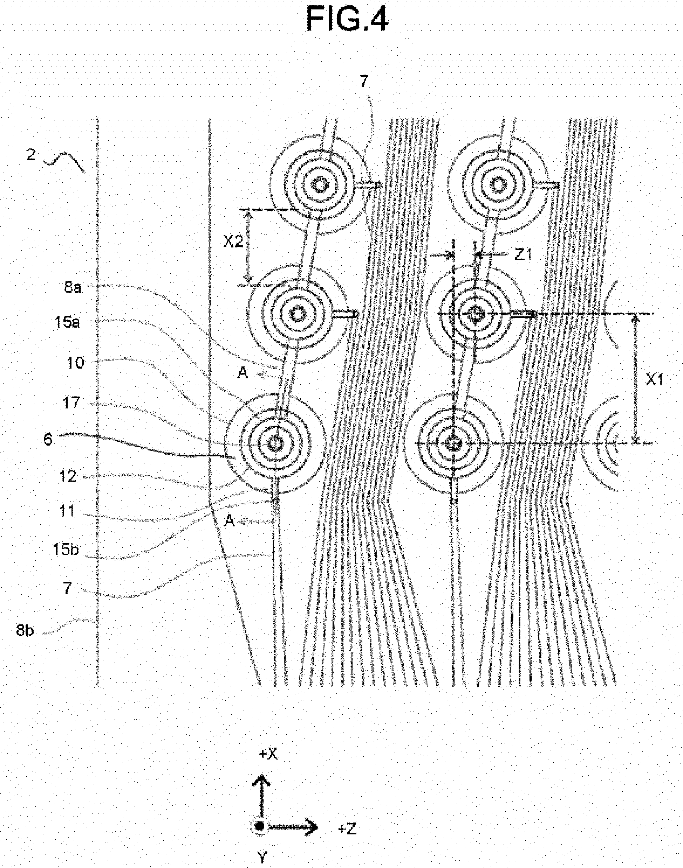

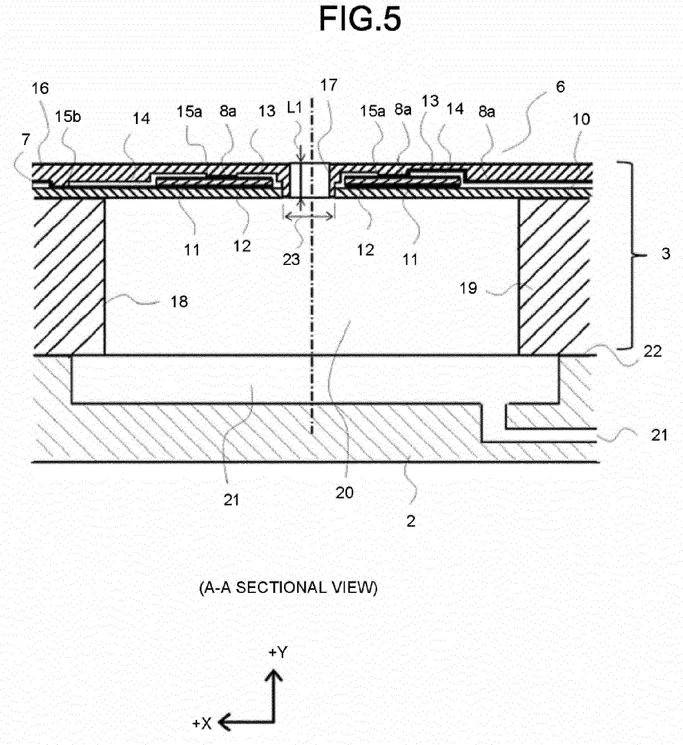

Fig. 2 is an external perspective view illustrating the inkjet head 1 (1A to 1D). The inkjet head 1 is composed of an ink supply section 2, a flow path base plate 3 (base plate), a flexible base plate 4 and a drive circuit 5. The ink supply pipe 133 is connected to the ink supply pressure adjustment devices 131a to 131d and the inkjet head 1. An arrow B1 indicates a direction in which the inkjet head 1 moves relative to printing surfaces of the papers 103 and 108. Fig. 3 is a plan view of the flow path base plate 3 obtained by viewing the inkjet head 1 from the ink ejection port side. Fig. 4 is a plan view illustrating the structure of the actuator 6 shown in Fig. 3 in detail. Fig. 5 is a sectional view taken along a line A-A of the flow path base plate 3 shown in Fig. 4 and is a view as seen in the direction of an arrow A.

As shown in Fig. 3, the flow path base plate 3 includes an actuator 6, an individual electrode 7, common electrodes 8a and 8b, and a mounting pad 9. As shown in Fig. 4, a nozzle 17 for ejecting the ink is arranged at the center of the actuator 6. Further, the actuator 6 includes a vibration plate 10, a lower electrode 11, a piezoelectric body film 12, an upper electrode 13, an insulating layer 14, a protective layer 16, and contact holes 15a and 15b. (refer to Fig. 5 for the upper electrode 13, the insulating layer 14 and the protective layer 16.) The lower electrode 11 and the upper electrode 13 sandwich the piezoelectric body film 12. The structure of sandwiching the piezoelectric body film 12 between the lower electrode 11 and the upper electrode 13 is the piezoelectric body. The flow path base plate 3 has a plurality of pressure chambers 18. One surface of each actuator constitutes one inner surface of the pressure chamber 18. The actuator 6 changes the volume of the pressure chamber 18 according to an electrical signal.

The ink supply section 2 includes an ink supply port 21 (Fig. 5). The ink supply port 21 is connected to the ink supply pipe 133 and the ink is supplied to the ink supply section 2. The ink supply section 2 is made of alumina (Al2O3). The ink supply section 2 supplies the ink to a plurality of the pressure chambers 18 formed from the ink supply port 21 to the flow path base plate 3. The ink supply section 2 is attached to the flow path base plate 3 with an epoxy resin 22.

On the surface of the flow path base plate 3, a plurality of circular actuators 6 is two-dimensionally arranged (Fig. 3) . At the center of the actuator 6, the nozzle 17 for ejecting the ink is formed. By the operation of the actuator 6, the ink droplet is ejected from the nozzle 17 in the +Y axis direction (Fig. 2). The nozzles 17 do not overlap each other in a printing direction (X direction) and are arranged at equal intervals in a direction (Z direction) orthogonal to the printing direction. The nozzles 17 are arranged away from each other at a distance X1 in the X axis direction and a distance Z1 in the Z axis direction (Fig. 4). In the present embodiment, X1 is 250 µm and Z1 is 21.2 µm. In the Z axis direction of the inkjet head 1, the nozzles are arranged at a recording density of 1200 (DPI (DOT PER INCH)). The recording density in the X axis direction is determined by the peripheral speed of the conveyance belt 110 and ink ejection time. In the present embodiment, printing is also performed at 1200 DPI also in the X axis direction. As shown in Fig. 3, by setting eight actuators 6 arranged in the X axis direction as one set, 75 sets of the actuators 6 are arranged in the Z axis direction. Further, by setting 75 sets of the actuators 6 as one group (62, 63), two groups are arranged in the X axis direction. The total number of actuators is 1,200.

The individual actuators 6 are operated according to signals applied to the individual electrodes 7 and the common electrodes 8a and 8b. The individual electrode 7 electrically connects one actuator 6 with the mounting pad 9 arranged corresponding to the actuator 6. The individual electrodes 7 are provided independently of each other electrically.

The common electrode 8a electrically connects one set (61) of the actuators 6. In other words, the common electrode 8a is shared by the eight actuators 6. The common electrode 8a connecting one set (61) of the actuators 6 is connected to the common electrode 8b at an end 8a1 of the common electrode 8a. A total of 150 common electrodes 8a from the second group (62, 63) of the actuators 6 are connected to the common electrode 8b. The end of the common electrode 8b is electrically connected to the mounting pad 9. The mounting pad 9 is an input port for sending a drive signal (electrical signal) to the actuator 6.

The mounting pad 9 is electrically connected to a large number of wiring patterns formed on the flexible base plate 4 by an anisotropic conductive film 41 (ACF: Anisotropic Contact Film) . The wiring pattern of the flexible base plate 4 is connected to the drive circuit 5. The actuator 6 operates according to a drive signal generated by the drive circuit 5. Instead of the ACF, it is also possible to connect the mounting pad 9 to the drive circuit 5 by a wire bonding method.

With reference to Fig. 5, the structure of the flow path base plate 3 is described. The flow path base plate 3 is composed of a single crystal silicon wafer 19 and the actuator 6 formed on a first surface of the single crystal silicon wafer 19. The single crystal silicon wafer 19 has a thickness of 500 µm. A hole 20 having a diameter of 200 µm is formed inside the single crystal silicon wafer 19 at a position corresponding to the actuator 6. The actuator 6 and the hole 20 constitute the pressure chamber 18 filled with the ink. The hole 20 is formed by dry etching from a second surface of the single crystal silicon wafer 19.

The vibration plate 10 of the actuator 6 is integrally formed with the flow path base plate 3 so as to cover the first surface of the pressure chamber 18. The vibration plate 10 is made of silicon dioxide having a thickness of 4 µm. A through hole 23 having a diameter of 30 µm is formed by the nozzles 17 in the vibration plate 10 concentrically with the pressure chamber 18. The silicon dioxide is formed by heating the single crystal silicon wafer 19 at a high temperature before the hole 20 is formed.

The thickness of the vibration plate 10 is suitably 2 to 10 µm, preferably 4 to 6 µm. If the piezoelectric body film 12 expands and contracts in an in-plane direction, warpage occurs in the vibration plate 10 made of insulating inorganic material. A plate that generates warpage is called the vibration plate. The vibration plate 13 is a volume variable plate that functions to change the pressure of the ink in the pressure chamber by deformation.

At a position facing the pressure chamber 18 of the vibration plate 10, the lower electrode 11, the piezoelectric body film 12 and the upper electrode 13 are formed in a donut shape (circular shape) around the nozzle 17. The nozzle 17 is formed at the center of the pressure chamber 18. The lower electrode 11, the piezoelectric body film 12 and the upper electrode 13 have an inner diameter of 30 µm and an outer diameter of 140 µm. The lower electrode 11 is made of platinum having a thickness of 0.15 µm. The piezoelectric body film 12 is made of PZT (lead zirconate titanate) having a thickness of 2 µm. The upper electrode 13 is made of platinum having a thickness of 0.15 µm. The lower electrode 11, the piezoelectric body film 12 and the upper electrode 13 are respectively formed by a RF magnetron sputtering method. The thicknesses of the lower electrode 11 and the upper electrode 13 are preferably in a range of 0.1 to 0.2 µm.

The material of the piezoelectric body film 12 is PZT (lead zirconate titanate). As other materials, KNN ((KNa) NbO3: potassium sodium niobate), PTO (PbTiO3: lead titanate), PMNT (Pb (Mg1/3Nb2/3)O3 - PbTiO3), PZNT (Pb(Zn1/3Nb2/3)O3 - PbTiO3), ZnO, AlN or the like can also be used.

A CVD (Chemical Vapor Deposition method), a sol gel method, an AD method (aerosol deposition method), a hydrothermal synthesis method and the like can also be used as other methods of manufacturing the piezoelectric body film 12.

In this embodiment, a preferred range of the thickness of the piezoelectric body film 12 is 5 µm or less. The film thickness of the piezoelectric body 12 is determined in consideration of piezoelectric characteristics and dielectric breakdown voltage of the piezoelectric material. The piezoelectric body film 12 of 5 µm or less can be manufactured by the above-mentioned manufacturing methods, and it is possible to generate sufficient pressure vibration to eject the ink in the pressure chamber 18. The piezoelectric body film 12 of 5 µm or more takes a long time in film formation, and as an interval between the lower electrode 11 and the upper electrode 13 is increased, the strength of the electric field generated in the piezoelectric body film 12 decreases, and the efficiency of the piezoelectric body film is reduced. Although a method of manufacturing the piezoelectric body film by a sintering method is available, it is very difficult to form the piezoelectric body film 12 of 5 µm or less by the sintering method.

On the upper electrode 13, the insulating layer 14 is formed. The insulating layer 14 is a silicon dioxide film (SiO2) with a thickness of 0.5 µm. The silicon dioxide film is formed by a TEOS-CVD method (Tetraethoxysilane-Chemical Vapor Deposition) . Contact holes 15a and 15b are formed in the insulating layer 14. The contact hole 15a is a donut-shaped opening having an inner diameter of 70 µm and an outer diameter of 100 µm. Through the contact hole 15a, the upper electrode 13 and the common electrode 8a are electrically connected. The contact hole 15b is an opening having a diameter of 15 µm. Through the contact hole 15b, the lower electrode 11 and the individual electrode 7 are electrically connected. The insulating layer 14 is formed to cover the outer periphery of the lower electrode 11, the piezoelectric body film 12, and the upper electrode 13. As a result, the insulating layer 14 prevents electrical contact between the common electrode 8a and the lower electrode 11 at the outer periphery of the piezoelectric body film 12.

On the insulating layer 14, the individual electrode 7, the common electrodes 8a and 8b, and the mounting pad 9 are formed. The individual electrode 7, the common electrodes 8a and 8b and the mounting pad 9 are made of gold (Au) with a thickness of 0.3 µm and are formed by the RF magnetron sputtering method. Each individual electrode 7 is connected to the lower electrode 11 of each actuator 6 through the contact hole 15b. The common electrodes 8a common to one set of actuators 6 are connected through the contact hole 15a on the upper electrode 13 of each actuator 6. The thicknesses of the individual electrode 7, the common electrodes 8a and 8b and the mounting pad 9 are preferably in a range of 0.1 µm to 0.5 µm.

In the present embodiment, the lower electrode 11 is connected to the individual electrode 7, and the upper electrode 13 is connected to the common electrode 8a. As another connection method, it is also possible to connect the upper electrode 13 to the individual electrode 7 and the lower electrode 11 to the common electrodes 8a and 8b.

On the individual electrode 7, the common electrodes 8a and 8b and the insulating layer 14, the protective layer 16 is formed. The protective layer 16 is made of photosensitive polyimide having a thickness of 4 µm. The protective layer is formed by performing spin coating to the flow path base plate 3 with the photosensitive polyimide material forming the insulating layer 14. The protective layer 16 is formed so as to cover the individual electrode 7, the common electrodes 8a and 8b, and the insulating layer 14 and further cover the inner surface of the through hole 23 of the vibration plate 10. As a result, the protective layer 16 prevents the individual electrode 7, the common electrodes 8a and 8b, and the insulating layer 14 from contacting with the ink in the pressure chamber 18.

The nozzle 17 communicating with the pressure chamber 18 is formed in the protective layer 16. The nozzle 17 is a cylindrical opening with a diameter of 20 µm. The nozzle 17 is formed by exposing and developing the photosensitive polyimide material forming the protective layer 16. A length of the nozzle 17 in the Y axis direction is determined by the sum of the thickness of the vibration plate 10 and the thickness of the protective layer 16. A length L1 of the nozzle 17 of the present embodiment is 8 µm.

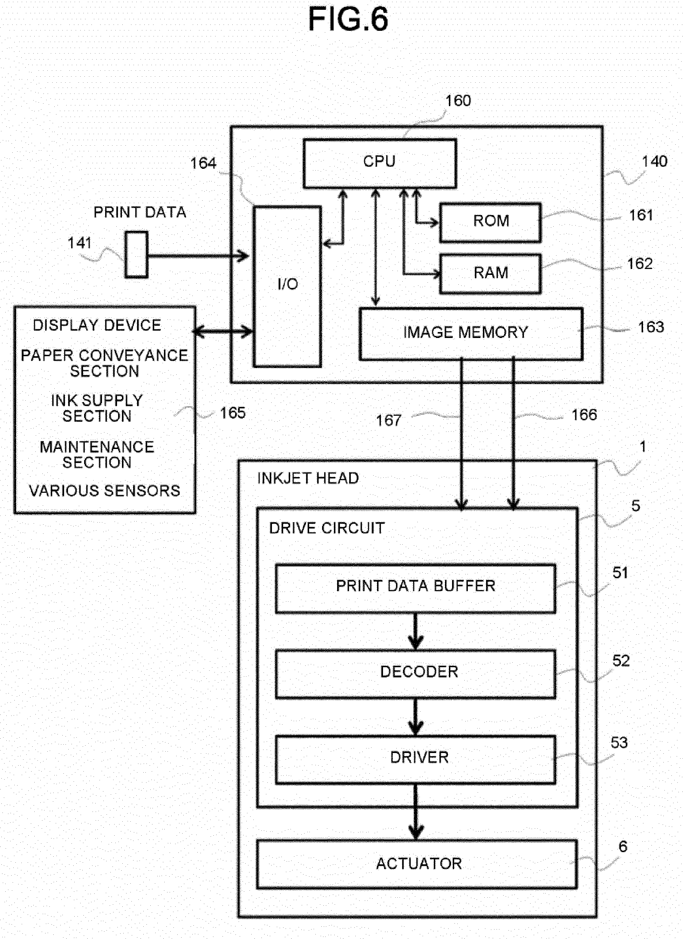

Fig. 6 is a block diagram illustrating the control substrate 140 of the inkjet printer 100 and the drive circuit 5 of the inkjet head 1. The control substrate 140 includes a CPU 160, a ROM 161, a RAM 162, an image memory 163, and an I/O port 164. Through the I/O port 164 which is an input/output port, the CPU 160 controls devices 165 (display device 142, a paper conveyance section for operating the conveyance belt 110, the ink supply section for adjusting the ink supply pressure, the maintenance section, and various sensors). As described above, the print data is transmitted from an external computer 150 to the I/O port 164 via a connector 141. The CPU 160 stores the print data in the image memory 163 according to programs stored in the ROM 161 and the RAM 162. The print data is transmitted from the image memory 163 to the drive circuit 5 of the inkjet head 1 in an order for forming an image. The print data includes data for not ejecting the ink which becomes a white background of an image and data for ejecting the ink which forms an image.

The drive circuit 5 includes a print data buffer 51, a decoder 52, and a driver 53. The print data buffer 51 stores the print data in a chronological order for each actuator 6. The decoder 152 controls the driver 53 for each actuator 6 based on the print data stored in the print data buffer 51. Under the control of the decoder 52, the driver 53 outputs an electrical signal V for operating each actuator 6. The electrical signal V is a voltage applied to each actuator 6.

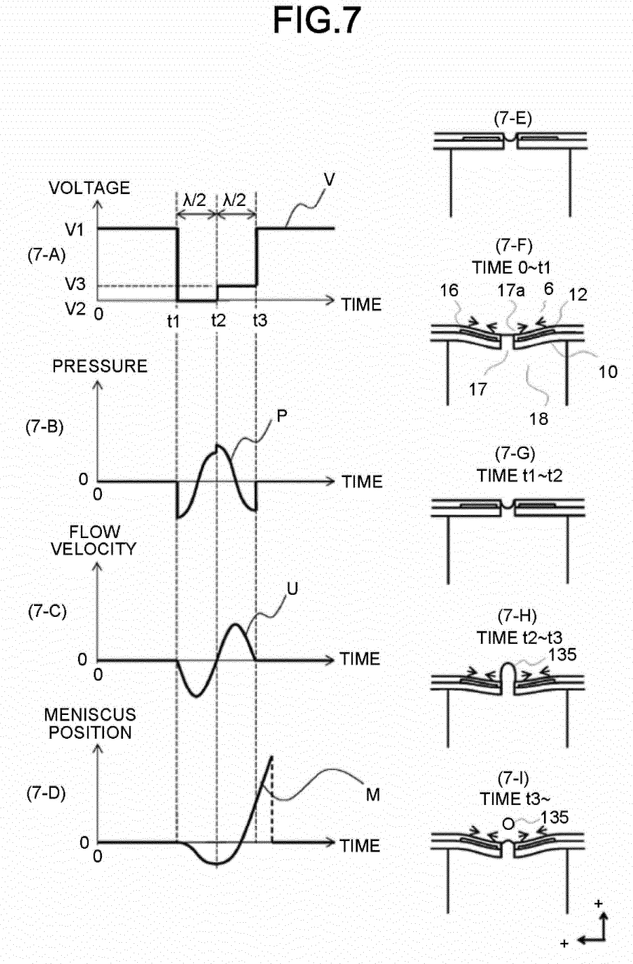

With reference to Fig. 7, the electrical signal V for ejecting the ink from the inkjet head 1 and a printing operation are described. Fig. 7 (7-A) shows the electrical signal V applied by the driver 53 of the drive circuit 5 to the actuator 6. According to the electrical signal V, a voltage V1 (bias voltage) is applied from a time 0 (voltage applying start) to a time t1, a voltage V2 = 0 V is applied from the time t1 to a time t2, a voltage V3 is applied from the time t2 to a time t3, and after the time t3, the voltage V1 is returned. V1 and V3 are positive voltages, and V3 is smaller than V1.The time from the time t1 to the time t2 and the time from the time t2 to the time t3 are half of a natural vibration period λ described later. By a voltage change from V1 to V2, V3 and V1, one drop of ink droplet 135 is ejected from the nozzle 17. The voltage of the common electrodes 8a and 8b is constant at 0 V.

Fig. 7 (7-B) shows a pressure vibration P of the ink generated in the pressure chamber 18 by the electrical signal V. A vertical axis indicates pressure and a horizontal axis represents time. Fig. 7(7-C) shows a flow velocity vibration U of the ink generated in the nozzle 17 by the pressure vibration P. A vertical axis represents flow velocity and a horizontal axis represents time. For the flow velocity vibration U, the ink ejection direction (+Y axis direction) is set as positive. Fig. 7 (7-D) shows a meniscus position M of the ink in the nozzle 17. A vertical axis represents the meniscus position and a horizontal axis represents time. At the meniscus position M, a position 17a of an opening surface at the ink ejection side of the nozzle 17 is set to 0 (Fig. 7(7-F)), the ink ejection side is set as positive and the pressure chamber side is set as negative.

Fig. 7(7-E) shows a state of the actuator 6 to which the voltage is not applied before the time 0 at which the voltage V1 is applied. That the voltage is not applied means that the voltage of 0 V or substantially 0 V is applied. Fig. 7 (7-F) shows an operation state of the actuator 6 from the time 0 to the time t1. Fig. 7 (7-G) shows an operation state of the actuator 6 from the time t1 to the time t2. Fig. 7 (7-H) shows an operation state of the actuator 6 from the time t2 to the time t3. Fig. 7(7-I) shows an operation state of the actuator 6 after the time t3 and the operation of ejecting the ink droplet 135 from the nozzle 17.

The time λ indicates the natural vibration period of the actuator 6 with the ink filled in the pressure chamber 18 and the nozzle 17. The pressure vibration P and the flow velocity vibration U of the ink in the pressure chamber 18 and the nozzle 17 also vibrate in this natural vibration period λ.

The natural vibration period λ is measured by detecting a change in an impedance of the actuator 6 with the ink filled in the inkjet head 1. For impedance detection, a commercially available impedance analyzer is used. As another method of measuring the natural vibration period λ, the natural vibration period λ can be calculated by measuring the vibration of the actuator 6 with a laser Doppler vibrometer in a state in which the electrical signal such as a step waveform is output from the drive circuit 5 to the actuator 6.

A process of ejecting the ink droplet 135 from a standby state is described. The ink is injected from the ink supply port 21 of the ink supply section 2 and is filled in the pressure chamber 18 and the nozzle 17. The ink pressure in the pressure chamber 18 is maintained at a pressure 1 kPa lower than the atmospheric pressure by the ink supply pressure adjustment device described above. The electrical signal V maintains the voltage V1 in the standby state before start timing t1 of the ink ejection operation (FIG. 7 (7-A)). In the standby state, the meniscus position M of the ink in the nozzle 17 is stationary near 0 (Fig. 7(7-D)).

As shown in Fig. 7 (7-A), in the standby state, the voltage V1 is applied between the lower electrode 11 and the upper electrode 13. An electric field is generated in the thickness direction of the piezoelectric body film 12 by the voltage V1, and a deformation of d31 mode occurs in the piezoelectric body film 12. The piezoelectric body film 12 extends in the thickness direction and contracts in a direction orthogonal to the thickness direction. Fig. 7(7-F) schematically shows the deformation of the piezoelectric body film 12. Due to the contraction of the piezoelectric body film 12, a compressive stress is generated in the vibration plate 10 and the protective layer 16, but the compressive force generated in the vibration plate 10 is greater than that generated in the protective layer 16. Therefore, the actuator 6 is bent in a direction of the pressure chamber 18, and the volume of the pressure chamber 18 is kept smaller than that in a case in which the voltage V1 is not applied.

At the time t1, an ink ejecting operation is started for forming the image. The electrical signal V changes from V1 to V2. The voltage V2 is used to increase the volume of the pressure chamber 18 in a state in which the voltage V1 is applied. The preferred voltage V2 is 0 V. The voltage V2 is not limited to 0 V, and it can be set to a small negative value, i.e., a value opposite in polarity to the voltage V1. However, if the negative value is too large, a polarization direction of the piezoelectric body film 12 is inverted with respect to the standby state. As a result, there is a possibility that a desired ink ejection operation is not obtained. In order to obtain an appropriate ink ejection operation, it is desirable the voltage V2 is 0 V or a voltage having the same polarity as the voltage V1.

If the electrical signal V changes from the voltage V1 to the voltage V2 at the time t1, as shown in Fig. 7 (7-B), the ink pressure P of the pressure chamber 18 decreases at the time t1. At the time t1, since the voltage is steeply changed from the voltage V1 to the voltage V2, the pressure P of the ink sharply drops at the time t1. After the ink pressure P drops, the ink is supplied from the ink supply section 2 to the pressure chamber 18. Since the ink is supplied to the pressure chamber 18, the decreased ink pressure P begins to rise. As shown in Fig. 7 (7-C), the ink meniscus M in the nozzle 17 retreats in the direction of the pressure chamber 18 from the time t1. The meniscus position M changes relatively gently due to the inertia of the ink.

In a period from the time t1 to the time t2, the voltage V2 applied to the actuator 6 is 0 V, and the actuator 6 returns to a non-deformed state as shown in Fig. 7(7-G). At the time t2 after the lapse of λ/2 from the time t1, the supply of the ink to the pressure chamber 18 is stopped and the increase of the ink pressure P stops (Fig. 7(7-B)). At the time t2, the ink flow velocity U in the nozzle 17 becomes 0 (Fig. 7(7-C)), and the ink meniscus M stops retracting (Fig. 7(7-D)).

At the time t2, the voltage changes from the voltage V2 to V3. By changing from the voltage V2 to V3, the actuator 6 is displaced in the direction towards the pressure chamber 18 so as to reduce the volume of the pressure chamber 18 (Fig. 7(7-H)). As described above, in a period from the time t1 to t2, the ink is supplied to the pressure chamber 18, and the ink pressure P rises. At the time t2, although the rise in the ink pressure P by the ink supply is stopped, the ink pressure P further increases due to the displacement of the actuator 6 caused by the change of the voltage V2 to V3. Due to the increased ink pressure P, the meniscus M advances in the ink ejection direction and the ink is pushed out of the nozzle 17. The voltage V3 continues for the time of λ/2 from the time t2, and the ink is ejected from the nozzle 17 as the ink droplet 135. The ink pressure P decreases from the time t2 to the time t3 after the lapse of the time of λ/2, and at the time t3, the ink pressure P becomes the lowest negative pressure. At the same time, the ink flow velocity U in the nozzle 17 becomes 0. However, the ink already ejected from the nozzle 17 flies towards the image receiving medium as the ink droplet 135.

At the time t3, the voltage of the electrical signal V is changed from V3 to V1 (Fig. 7(7-1)). As the voltage changes from V3 to V1, the actuator 6 displaces in the direction of the pressure chamber 18 and the ink in the pressure chamber 18 is pressurized. The increased ink pressure P becomes substantially 0 from the lowest negative pressure state, and the vibration of the ink stops.

With the flight of the ink droplet 135, a tail of the ink droplet 135 and the ink in the nozzle 17 naturally separate, and the meniscus is formed again at the meniscus position M around 0.

The voltage V3 is determined according to an attenuation rate of the pressure vibration P of the ink or the flow velocity vibration U. The attenuation rate of the pressure vibration P and the attenuation rate of the flow velocity vibration U have the same value. The attenuation rate can be calculated simultaneously with the measurement of the natural vibration period λ. With the ink filled in the inkjet head 1, the actuator 6 is operated, and then the operation is stopped. Due to vibration of the ink, the actuator 6 mechanically vibrates and generates the voltage. From the attenuation amount of the voltage generated in the actuator 6, the attenuation rate can be measured. The attenuation rate can also be measured by measuring the mechanical vibration of the actuator 6 with the laser Doppler vibrometer. If the attenuation rate is large, a ratio of voltage (V1-V3) to voltage (V1-V2) is set to be small. In other words, the voltage V3 is set to be high. If the attenuation rate is small, the ratio of voltage (V1-V3) to voltage (V1-V2) is set to be large. In other words, the voltage V3 is set to be low. The voltage V3 is adjusted so that the pressure vibration P or the flow velocity vibration U after the lapse of time t3 becomes minimum or substantially 0.

Since the pressure vibration P or the flow velocity vibration U after the lapse of the time t3 is adjusted so as to be minimum or substantially 0, as shown in Fig. 7 (7-B and 7-C), the pressure vibration P of the ink and the flow velocity vibration U are stopped immediately after the ink droplet 135 is ejected from the nozzle 17. Since the pressure vibration P and the flow velocity vibration U are stopped, it is possible to prevent unintentional ink ejection due to residual vibration after the ink ejection operation.

As shown in Fig. 7(7-D), the ink meniscus is formed again in the vicinity of a stationary state before ejecting the ink after the ink droplet 135 is ejected. The meniscus which is formed again is almost stationary. Since the displacement of the meniscus does not occur, unintended ink ejection can be prevented.

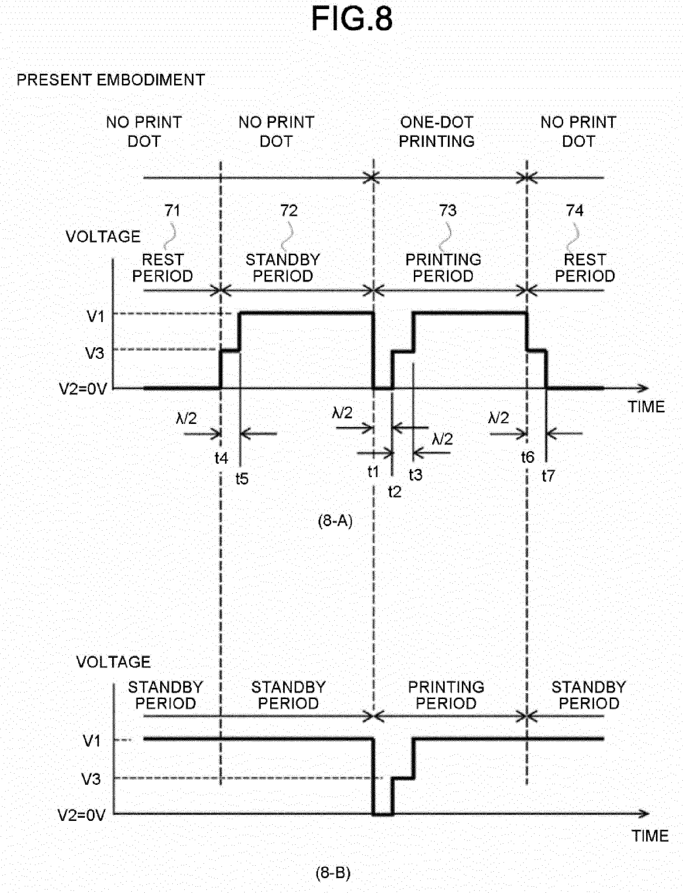

With reference to Fig. 8, the electrical signal V (drive signal V) for operating the inkjet head 1 is described.

The drive signal V for operating the inkjet head 1 of the present embodiment has three kinds of periods including the rest period, the standby period, and the printing period. The rest period is a period (rest state) during which the voltage V is not applied to the actuator 6. The standby period is a period (standby state) during which the voltage V is applied to the actuator 6 and the printing operation is possible. The printing period is a period during which the actuator 6 is operated to eject the ink droplet 135 from the nozzle 17.

The rest period is arranged for each actuator 6 according to the print data. The actuator 6 operates according to a signal for ejecting the ink in print data and does not operate according to a signal for not ejecting the ink in the print data. A period during which the ink ejection operation is not performed in the period in which the ink is not ejected in the print data is defined as the rest period. In the rest period, the voltage V applied to the actuator 6 is 0 V or a voltage V lower than a standby voltage. A period during which the ink ejection operation is performed in the period in which the ink is not ejected in the print data is set as the standby period. In the standby period, the standby voltage is applied to the actuator 6. Following the standby period is the printing period during which the printing operation is executed. The rest period, the standby period, and the printing period are switched for each actuator 6 to eject the ink. Rest periods 71 and 74 and standby period 72 are all non-printing periods without ejecting the ink.

With reference to Fig. 8(8-A), the rest period, the standby period, and the printing period are described in detail.

The rest period 71 is arranged before the standby period 72. In the rest period 71, the voltage V2 (0 V) is applied to the actuator 6. In the case of the print data for not ejecting the ink, the voltage V2 in the rest period 71 is applied to the actuator 6. The voltage V2 (0 V) in the rest period 71 is applied to the actuator 6 until the standby period 72 immediately before the print data for ejecting the ink.

Just before the printing period 73 for ejecting the ink droplet, the standby period 72 is provided. The standby period 72 (from time t4 to t1) is the same as the printing period 73 (time t1 to t6) during which one ink droplet is ejected. In the standby period 72, the voltage V3 (an intermediate voltage of the voltage V1) is applied to the actuator 6 for a period from the time t4 to t5 (a time of half of the natural vibration period λ), and from the time t5 to t1, a voltage V1 is applied to the actuator 6. If the voltage is instantaneously changed from V2 (0 V) to V1 at the time of switching from the rest period 71 to the standby period 72, there is a possibility that the ink is ejected unintentionally or air bubbles are taken in from the nozzle 17. By applying the intermediate voltage to the actuator 6 during a period from the time t4 to t5, pressure vibration accompanying voltage change is suppressed.

The printing period 73 indicates a period during which the actuator 6 is operated to eject one ink droplet 135 from one nozzle 17. The actuator 6 ejects one ink droplet 135 in an operation from the time t1 to t3 (time λ) and maintains the voltage V1 for the time of about 3λ until ejecting the next ink droplet 135. By maintaining the voltage V1 for the time of about 3λ after ejection of the ink droplet 135, the residual vibration in the pressure chamber 18 is sufficiently stopped. Also in the case of transition to the rest period or the standby period after ejecting one ink droplet 135, the voltage V1 is maintained for the time of about 3λ.

After the printing period 73 is ended, if the print data does not lead to ink ejection, the rest period 74 arrives. In the rest period 74, the intermediate voltage V3 is applied to the actuator 6 from the time t6 indicates the end of the printing period 73 to t7, i.e., the time of half of the natural vibration period λ. Thereafter, in the rest period 74, the voltage applied to the actuator 6 is V2 (0 V). The reason why the intermediate voltage V3 is applied to the actuator 6 during the period from the time t6 to t7 is to suppress the pressure vibration accompanying the voltage change. As a result, it is possible to suppress a phenomenon that the ink is unintentionally ejected and a phenomenon that air bubbles are taken in from the nozzle 17.

In the present embodiment, one standby period is provided before the printing period. The one standby period (T) is the same as one printing period (T) . It is also possible to provide the standby period (nT time) consecutively n times (1 ≦ n ≦ 5) in place of one standby period. The standby period (T) can be provided without limiting to an integer multiple of one printing period (T). In that case, it is effective that the intermediate voltage V3 is applied to the actuator 6 only at the beginning of the standby period. In the present embodiment, the rest period 74 arrives immediately after the end of the printing period. Instead of quickly entering the rest period 74, it is also possible to provide the standby period 72 after the end of the printing period 73 and then enter the rest period 74.

A timing at which the rest periods 71 and 74 and the standby period 72 which are the non-printing periods are switched is determined for each nozzle 17 according to the print data. The CPU 160 of the control substrate 140 determines the switching timing by referring to the print data stored in the image memory 163. The control substrate 140 transmits print data 166 including gradation information and data 167 for specifying whether the non-printing period is the rest period or the standby period for each actuator 6 to the drive circuit 5. The drive circuit 5 switches the rest period and the standby period during the non-printing period based on the data transmitted from the control substrate 140.

In the present embodiment, the ink pressure in the pressure chamber 18 is lowered before the ink is ejected to generate the pressure vibration U, and at a time point at which the ink pressure increases, the ink is further pressurized to be ejected. The printing method is a so-called pull-beat method. Therefore, it is possible to eject the ink at a high pressure from the nozzle 17. The ink is accelerated in the nozzle 17 in order to eject the ink after temporarily retracting the ink meniscus M toward the pressure chamber side. By accelerating the ink in the nozzle 17, it is possible to increase the straightness of the ejected ink droplet 135. If the straightness of the ink droplet 135 is high, the accuracy of landing position on the papers 103 and 108 is improved, and the resolution of image formation is improved.

At the time of operating the inkjet head 1 by the pull-beat method, there is no need to apply an electric field to the piezoelectric body film 12 in the rest period. A predetermined electric field is generated in the piezoelectric body film 12 to eject the ink in the printing period in which the ink is ejected and in the standby period immediately before the ink is ejected. Since it is unnecessary to keep applying the electric field to the piezoelectric body film 12 in the rest period, deterioration of the piezoelectric body film 12 can be suppressed, and the lifetime of the inkjet head 1 can be increased.

In the inkjet head 1 of the present embodiment, the piezoelectric body film 12 is operated in the electric field exceeding a coercive electric field. The coercive electric field means an electric field intensity at which the polarization direction of the piezoelectric body is reversed. Since the film thickness of the piezoelectric body film 12 of the actuator 6 is as thin as 2 µm, the electric field exceeding the coercive field is generated in the piezoelectric body film 12 at a low voltage. If the piezoelectric body film 12 is driven by the electric field exceeding the coercive electric field, a distortion direction of the piezoelectric body film becomes the same regardless of the direction of the electric field with respect to the polarization direction. In other words, the displacement direction of the actuator is constant regardless of the direction of the electric field.

Since the displacement direction of the actuator is constant regardless of the direction of the electric field, the voltage applied to the actuator is a unipolar voltage. Therefore, an absolute value of the voltage V1 in the standby period is higher than those of the voltages V2 and V3 for ejecting the liquid from the nozzle in the printing period, and the absolute value of the voltage in the rest period is lower than that of the voltage in the standby period.

For reference, the electrical signal for driving a conventional inkjet head is described with reference to Fig. 8(8-B). In order to perform the pull-beat operation, it is necessary to continue applying a bias voltage to the piezoelectric body on standby prior to ejection of the ink, it is necessary to set the voltage to 0 V at the time the ink is ejected and apply the voltage to the piezoelectric body again after the ink is ejected. In other words, except for the printing period, it is necessary to constantly generate the electric field in the piezoelectric body. If the electric field is continuously generated for a long time in the piezoelectric body thin film, there is a possibility that the piezoelectric body thin film degrades and dielectric breakdown occurs eventually. If the dielectric breakdown occurs in the piezoelectric body thin film, the ink ejection operation cannot be executed. Generally, it is said that in the inkjet head, the time of the standby state in which the ink is not ejected is ten times or more of the time of ejecting the ink by operating the piezoelectric body. Compared with the conventional constitution in which it is necessary to continuously apply the bias voltage to the piezoelectric body in the non-printing period, in the constitution of the present embodiment, the lifetime of the inkjet head can be extended without applying the bias voltage in the rest period.

### (Second Embodiment)

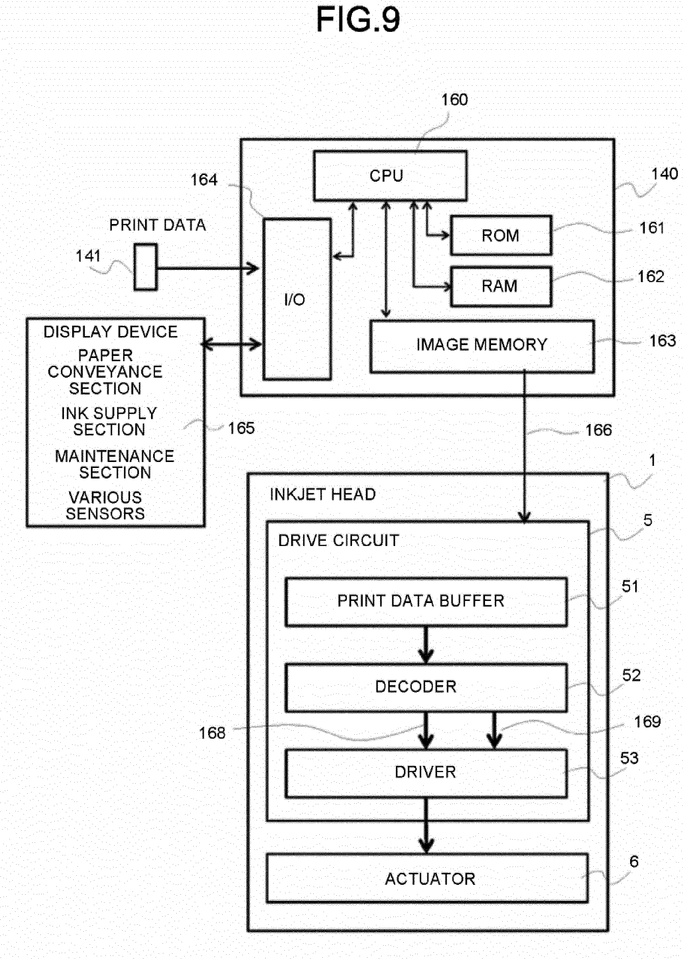

With reference to Fig. 9, the second embodiment is described. In the second embodiment, the structures of the control substrate 140 and the drive circuit 5 loaded on the inkjet head 1 are different from those in the first embodiment. Except for the structures of the control substrate 140 and the drive circuit 5, the structures of the inkjet head 1 and the inkjet printer 100 of the second embodiment are the same as those of the first embodiment.

The timing for switching the rest periods 71 and 74 and the standby period 72 which are the non-printing periods is determined for each nozzle 17 according to the print data as in the first embodiment. The print data stored in the image memory 163 of the control substrate 140 is transmitted to the drive circuit 5 loaded on the inkjet head 1. The drive circuit 5 stores the received print data in the print data buffer 51 in the chronological order for each actuator 6. Based on the print data stored in the print data buffer 51, the decoder 52 generates print data 168 including the gradation information and data 169 for designating whether the non-printing period is the rest period or the standby period for each actuator 6, respectively. Based on the data generated by the decoder 5, the rest period and the standby period in the non-printing period are switched, and the actuator 6 is operated in the printing period by the driver 53 of the drive circuit 5.

In the second embodiment, since the drive circuit 5 loaded on the inkjet head 1 generates the data 169 for designating the rest period or the standby period, the control substrate 140 may send only the print data to the inkjet head. Therefore, it is possible to provide an inkjet head with high versatility.

### (Third Embodiment)

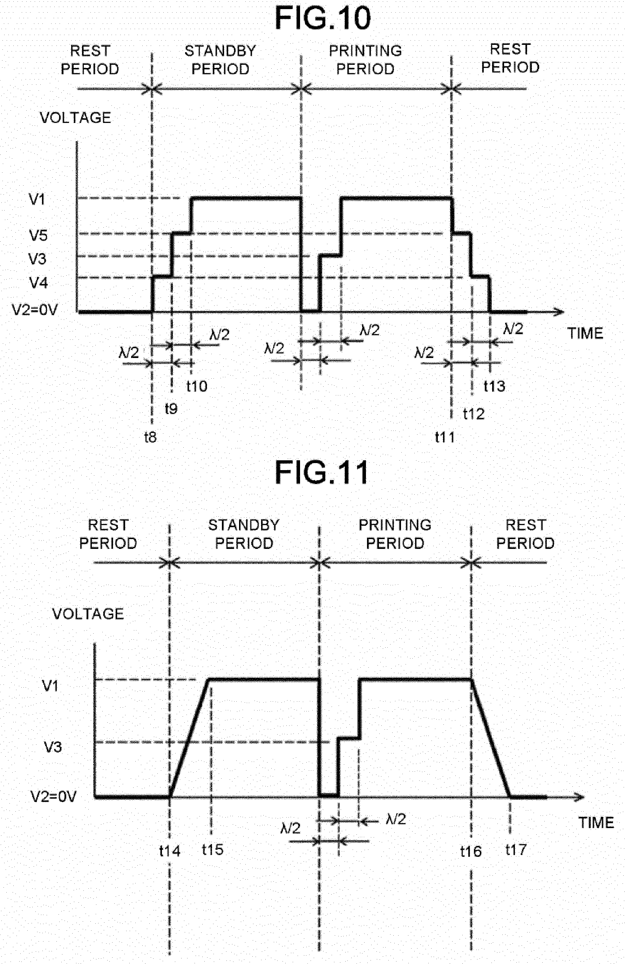

With reference to Fig. 10, the third embodiment is described. In the third embodiment, the change in the voltage at the time of switching from the rest period to the standby period and the change in voltage at the time of switching from the printing period to the rest period are different from those in the first embodiment. A circuit for generating a change in the voltage at the time of switching is provided. The structures of the inkjet head 1 and the inkjet printer 100 of the third embodiment are the same as those of the first embodiment except for the change in the voltage at the time of switching.

In the third embodiment, the rest period is switched to the standby period at a time t8. Until the time t8, the voltage V2 (0 V) is applied to the actuator 6 and a voltage V4 (V1*1/3) is applied to the actuator 6 in a period from time t8 to t9. In a period from the time t9 to t10, voltage V5 (V1*2/3) is applied to the actuator 6. At the time of switching from the printing period to the rest period, a voltage V5 (V1*2/3) is applied to the actuator 6 in a period from time t11 to t12. In a period from the time t12 to t13, the voltage V4 (V1*1/3) is applied to the actuator 6. The rising of the voltage from the rest period to the standby period and the falling of the voltage from the printing period to the rest period are performed in a stepwise waveform. Periods from the time t8 to t9, from the time t9 to t10, from the time t11 to t12, and from the time t12 to t13 are the time of λ/2 of the natural vibration period.

In the third embodiment, in the switching from the rest period to the standby period or from the printing period to the rest period, the voltage applied to the piezoelectric body is increased or decreased stepwise. By changing the applied voltage stepwise, it is possible to prevent unintentional ink ejection from the nozzle 17 and taking in of air bubbles into the pressure chamber 18 through the nozzle 17.

### (Fourth Embodiment)

With reference to Fig. 11, the fourth embodiment is described. In the fourth embodiment, a change in the voltage at the time of switching from the rest period to the standby period and a change in the voltage at the time of switching from the printing period to the rest period are different from those in the first embodiment. A circuit for generating a change in the voltage at the time of switching is provided. The structures of the inkjet head 1 and the inkjet printer 100 of the fourth embodiment are the same as those of the first embodiment except for the change in the voltage at the time of switching.

In the fourth embodiment, at a time t14, the rest period is switched to the standby period. Until the time t14, the voltage V2 (0 V) is applied to the actuator 6, and the voltage linearly changes from the time t14 to a time t15 until the voltage V1 is reached. At a time t16, the printing period is switched to the rest period. Until the time t16, the voltage V1 is applied to the actuator 6, and the voltage linearly changes from the time t16 to t17 until the voltage becomes V2. The periods from the time t14 to the time t15 and from the time t16 to the time t17 are the natural vibration period λ.

In the fourth embodiment, in the switching from the rest period to the standby period or from the printing period to the rest period, the applied voltage to the piezoelectric body is linearly increased or decreased over the time of the natural vibration period λ. By linearly changing the voltage, it is possible to prevent unintentional ink ejection from the nozzle 17 and taking in of air bubbles into the pressure chamber 18 through the nozzle 17.

### (Fifth Embodiment)

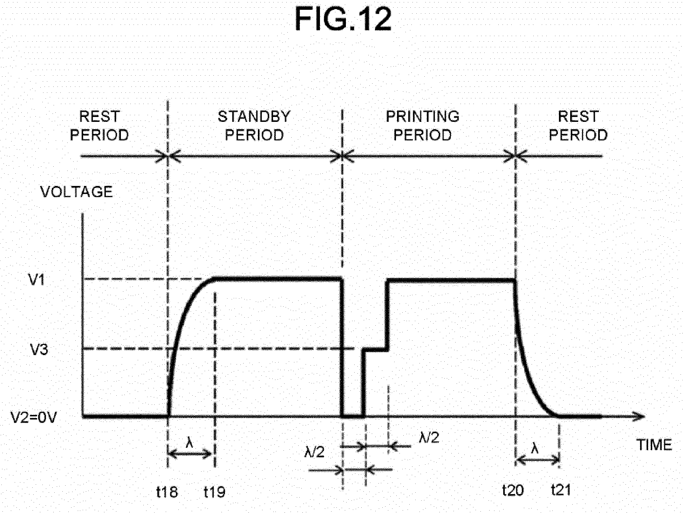

With reference to Fig. 12, the fifth embodiment is described. In the fifth embodiment, a change in the voltage at the time of switching from the rest period to the standby period and a change in the voltage at the time of switching from the printing period to the rest period are different from those in the first embodiment. A circuit for generating a change in the voltage at the time of switching is provided. The structures of the inkjet head 1 and the inkjet printer 100 of the fifth embodiment are the same as those of the first embodiment except for the change in the voltage at the time of switching.

In the fifth embodiment, the rest period is switched to the standby period at a time t18. Until the time t18, the voltage V2 (0 V) is applied to the actuator 6, and the voltage changes exponentially until the voltage becomes the voltage V1 from the time t18 to the time t19. The printing period is switched to the rest period at time t20. Until the time t20, the voltage V1 is applied to the actuator 6, and in a period from the time t20 to the time t21, the voltage changes exponentially from the voltage V1 to the voltage V2. The period from the time t18 to t19 and the period from time t20 to t21 are the natural vibration period λ.

In the fifth embodiment, in switching from the rest period to the standby period or from the printing period to the rest period, the voltage applied to the piezoelectric body is increased or decreased exponentially over the time of the natural vibration period λ. By changing the voltage according to the exponentiation function, it is possible to prevent unintentional ink ejection from the nozzle 17 and taking in of air bubbles into the pressure chamber 18 through the nozzle 17. Since the exponentiation function is determined by a time constant of an output circuit, the exponentiation function can be generated with a circuit constitution simpler than that in the third and fourth embodiments.

In the above embodiment, an inkjet head is exemplified as the liquid injection apparatus. Instead of ejecting the ink, the liquid injection apparatus can eject the reagent and pharmaceuticals used in the drug discovery and the biotechnology field. In the liquid supply apparatus loaded with the liquid injection apparatus, the reagent and pharmaceuticals are supplied to a predetermined number of the liquid droplets in a recess of a well plate in which a plurality of recesses is formed. The liquid injection apparatus can also eject liquid resins used in the 3D printer. The liquid injection apparatus for the 3D printer ejects the liquid resin to a predetermined position at a predetermined timing based on three-dimensional design data. The 3D printer stacks liquid resin and then hardens it to create a three-dimensional structure.

### (Sixth Embodiment)

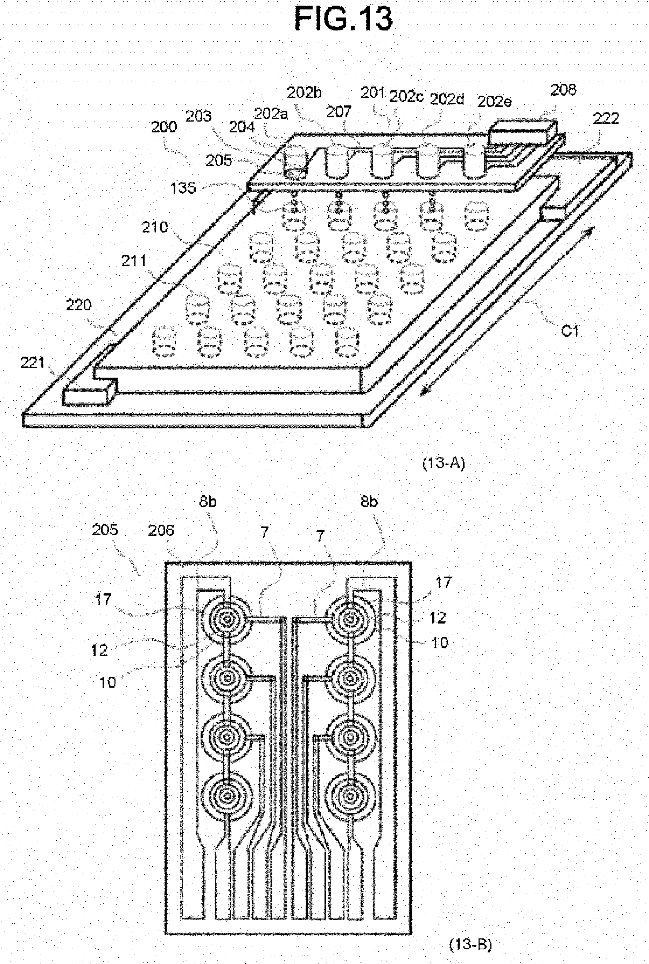

Fig. 13(13-A) is a perspective view of a dispensing apparatus 200 according to the sixth embodiment. Fig. 13(13-B) shows a liquid injection section 205 viewed from a liquid ejection surface side. The dispensing apparatus 200 is composed of a liquid injection apparatus 201 and a plate conveyance section 220.

The liquid injection apparatus 201 includes liquid ejection heads 202a, 202b, 202c, 202d, and 202e that eject reagent 203 as a predetermined amount of the liquid droplets 135. The liquid ejection heads 202a to 202e have the same constitution. The liquid ejection head 202a includes a container 204 for holding the reagent 203 and the liquid injection section 205 provided for each container 204. The liquid injection section 205 has the same constitution as the above-described inkjet head except for the nozzle arrangement. As shown in Fig. 13(13-B), the nozzle 17 of the liquid injection section 205 is arranged in a straight line parallel to the end surface of a base plate 206 instead of an inclined arrangement shown in Fig. 3 and Fig. 4. By arranging the nozzles 17 in a straight line, it is possible to make the base plate 206 smaller than that in a case of the inclined arrangement. The liquid injection section 205 receives a control signal through a wiring 207 and a connector 208 and ejects the necessary amount of the reagent 203 according to the control signal. The signal for ejecting the reagent 203 includes the rest period, the standby period, and the printing period similarly to the drive circuit for driving the inkjet head described above.

The plate conveyance section 220 conveys a plate 210 (medium) having a plurality of recesses 211 in a C1 direction with respect to the liquid injection apparatus 201. The plate 210 is made of resin and has a plurality of recesses 211 for holding the reagent for drug discovery. The plate 210 is secured to the plate conveyance section 220 by positioning members 221 and 222 of the plate conveyance section 220. The dispensing apparatus 200 can automatically mix a predetermined amount of the reagent 203 with the chemicals held in the respective recesses 211 while moving the plate 210 in the C1 direction.

In the second to sixth embodiments, the same effects as that in the first embodiment can be obtained.

All of the liquid injection recording apparatus, the dispensing apparatus, and the 3D printer are liquid supply apparatuses that supply a predetermined amount of the liquid droplets.

The voltage in the rest period is preferably "0", but as mentioned in the description of the embodiments so far, it is possible to set the voltage in the reset period to a small negative value, i.e., a value opposite in polarity to the voltage V1. However, if the negative value is too large, the polarization direction of the piezoelectric body film 12 is inverted with respect to that in the standby state. As a result, there is a possibility that a desired ink ejection operation is not obtained. In order to obtain an appropriate ink ejection operation, the voltage V2 is preferably 0 V or a voltage having the same polarity as the voltage V1. From the viewpoint of prolonging the lifetime of the "piezoelectric body film (thin film)", it is also possible to select a value other than "0" for the voltage V2. In this case, it is also possible to set the voltage 2 to a value that does not affect the lifetime of the piezoelectric body film or to a value that does not substantially cause contraction of the piezoelectric body film. The voltage V2 may be a value regarded as "0" or "substantially 0" regardless of the same polarity or the opposite polarity with respect to the bias voltage V1. As shown in Fig. 8, voltages V1, V2, and V3 are specified in the rest period, the standby period, and the printing period. For example, although the bias voltage in the standby period is set to V1, if it does not affect the motion of the ink droplet, the bias voltage is not necessarily V1, for example, the same voltage value is adopted; however, the voltage values are not necessarily the same, and the voltage values can be values appropriately different from V1, V2 and V3 in the rest period, the standby period, the printing period.

## Claims

1. A driving method of a liquid injection apparatus (2) comprising a base plate (3) on which a pressure chamber (18) communicating with a nozzle (17) which ejects liquid is formed, a piezoelectric body (12) arranged corresponding to the pressure chamber (18) and contracting in a direction orthogonal to a thickness direction by applying a voltage, and a volume variable plate (13) arranged between the pressure chamber (18) and the piezoelectric body (12) and changing a volume of the pressure chamber (18) by applying a voltage to the piezoelectric body (12), the method comprising:
1) applying a first voltage (V2) to the piezoelectric body (12) in a rest period (71) before the liquid is ejected from the nozzle (17);
2) applying a second voltage (V1) higher than the first voltage (V2) to the piezoelectric body (12) to reduce the volume of the pressure chamber (18) by contracting the piezoelectric body (12) in a standby period (72) before the liquid is ejected from the nozzle, wherein the rest period (71) is arranged before the standby period (72);
3) applying the second voltage (V1) to the piezoelectric body (12) after applying a third voltage (V3) lower than the second voltage (V1) to the piezoelectric body (12), in a printing period (73), to eject the liquid from the nozzle (17); and
switching the first step, the second step and the third step according to ejection data indicating whether to eject the liquid.

2. The method according to claim 1, wherein the first voltage (V2) is 0.

3. The method according to claim 1 or 2, wherein in the printing period (73) the voltage applied to the piezoelectric body (12) changes from the second voltage (V1) to the third voltage and then from the third voltage to the second voltage.

4. The method according to any of claims 1 to 3, wherein after the liquid is ejected from the nozzle, the method returns to the rest period (71) in which the first voltage (V2) is applied.

5. The method according to any of claims 1 to 4, wherein in the standby period (72) the voltage applied to the piezoelectric body (12) is:
- stepwise increased from the first voltage (V2) to the second voltage, and/or
- linearly increased from the first voltage (V2) to the second voltage, and/or
- exponentially increased from the first voltage (V2) to the second voltage.

6. The method according to any of claims 1 to 5, wherein in the rest period (71) the voltage applied to the piezoelectric body (12) is:
- stepwise decreased from the second voltage (V1) to the first voltage (V2), and/or
- linearly decreased from the second voltage (V1) to the first voltage (V2), and/or
- exponentially decreased from the second voltage (V1) to the first voltage (V2).

7. The method according to any of claims 1 to 6, wherein the piezoelectric body (12) comprises a piezoelectric body film having a thickness of 5 µm or less.

8. The method according to any of claims 1 to 7, wherein the piezoelectric body (12) comprises a piezoelectric body film having a thickness of 2 µm to 5 µm.

9. The method according to any of claims 1 to 8, wherein the piezoelectric body (12) comprises a piezoelectric body film, and wherein the first voltage (V2) is set at a value that does not substantially affect lifetime of the piezoelectric body film or at a value that does not substantially cause contraction of the piezoelectric body film.

10. The method according to any of claims 1 to 9, wherein the method does not comprise continuously applying a bias voltage to the piezoelectric body (12) in the rest period.

11. The method according to any of claims 1 to 10, wherein the method does not comprise continuously generating an electric field in the piezoelectric body (12) in the rest period.

12. A liquid injection apparatus (2), comprising:
a base plate (3) on which a pressure chamber (18) communicating with a nozzle (17) which ejects liquid is formed;
a piezoelectric body, arranged corresponding to the pressure chamber, configured to contract in a direction orthogonal to a thickness direction by applying a voltage;
a volume variable plate, arranged between the pressure chamber (18) and the piezoelectric body, configured to change a volume of the pressure chamber (18) by applying a voltage to the piezoelectric body; and
a drive circuit configured
to generate an electrical signal comprising a first voltage (V2) in a rest state before the liquid is ejected from the nozzle, a second voltage (V1) in a standby state which is higher than the first voltage (V2) for contracting the piezoelectric body (12) before the liquid is ejected from the nozzle, and a third voltage lower than the second voltage (V1) for ejecting the liquid from the nozzle, wherein the rest period (71) is arranged before the standby period (72), and
to switch the first voltage, the second voltage (V1) and the third voltage and to apply them to the piezoelectric body (12) according to ejection data indicating whether to eject the liquid.

13. The liquid injection apparatus (2) according to claim 12, wherein
the drive circuit generates a signal for switching the first voltage, the second voltage, and the third voltage based on the ejection data, and switches the first voltage, the second voltage, and the third voltage according to the switching signal, and wherein the first voltage (V2) is 0.

14. The liquid injection apparatus (2) according to claim 12 or 13, wherein
when natural vibration period of liquid in the pressure chamber (18) is set to λ, a voltage between the first voltage (V2) and the second voltage (V1) is maintained for a period of λ/2 in switching from the first voltage (V2) in the rest state to the second voltage (V1) in the standby state.

15. A liquid supply apparatus (100), comprising:
a liquid injection apparatus (2) according to any of claims 12 to 14; a memory (51) configured to store the ejection data;
a control circuit (53) configured to generate a signal for switching the first voltage (V2), the second voltage (V1) and the third voltage based on the ejection data stored in the memory (51); and
a conveyance device (165) configured to convey a medium for receiving the liquid ejected from the liquid injection apparatus (2).

## Patentansprüche

1. Ansteuerungsverfahren einer Flüssigkeitseinspritzeinrichtung (2), umfassend eine Grundplatte (3), auf der eine Druckkammer (18), die mit einer Düse (17) in Verbindung steht, die Flüssigkeit ausstößt, ausgebildet ist, wobei ein piezoelektrischer Körper (12) in Übereinstimmung mit der Druckkammer (18) angeordnet ist und sich in einer Richtung orthogonal zu einer Dickenrichtung durch Anlegen einer Spannung zusammenzieht, und eine volumenvariable Platte (13), die zwischen der Druckkammer (18) und dem piezoelektrischen Körper (12) angeordnet ist und ein Volumen der Druckkammer (18) durch Anlegen einer Spannung an den piezoelektrischen Körper (12) ändert, wobei das Verfahren umfasst:
1) Anlegen einer ersten Spannung (V2) an den piezoelektrischen Körper (12) in einer Ruheperiode (71), bevor die Flüssigkeit aus der Düse (17) ausgestoßen wird;
2) Anlegen einer zweiten Spannung (V1), die höher als die erste Spannung (V2) ist, an den piezoelektrischen Körper (12), um das Volumen der Druckkammer (18) zu verringern, indem der piezoelektrische Körper (12) in einer Standby-Periode (72) zusammengezogen wird, bevor die Flüssigkeit aus der Düse ausgestoßen wird, wobei die Ruheperiode (71) vor der Standby-Periode (72) angeordnet ist;
3) Anlegen der zweiten Spannung (V1) an den piezoelektrischen Körper (12) nach Anlegen einer dritten Spannung (V3), die niedriger als die zweite Spannung (V1) ist, an den piezoelektrischen Körper (12) in einer Druckperiode (73), um die Flüssigkeit aus der Düse (17) auszustoßen; und
Umschalten des ersten Schritts, des zweiten Schritts und des dritten Schritts gemäß den Ausstoßdaten, die angeben, ob die Flüssigkeit ausgestoßen werden soll.

2. Verfahren nach Anspruch 1, wobei die erste Spannung (V2) 0 ist.

3. Verfahren nach Anspruch 1 oder 2, wobei in der Druckperiode (73) die an den piezoelektrischen Körper (12) angelegte Spannung von der zweiten Spannung (V1) zur dritten Spannung und dann von der dritten Spannung zur zweiten Spannung wechselt.

4. Verfahren nach einem der Ansprüche 1 bis 3, wobei das Verfahren nach dem Ausstoßen der Flüssigkeit aus der Düse zu der Ruheperiode (71) zurückkehrt, in der die erste Spannung (V2) angelegt wird.

5. Verfahren nach einem der Ansprüche 1 bis 4, wobei in der Standby-Periode (72) die an den piezoelektrischen Körper (12) angelegte Spannung:
- schrittweise von der ersten Spannung (V2) auf die zweite Spannung erhöht wird, und/oder
- linear von der ersten Spannung (V2) auf die zweite Spannung erhöht wird, und/oder
- exponentiell von der ersten Spannung (V2) auf die zweite Spannung erhöht wird.

6. Verfahren nach einem der Ansprüche 1 bis 5, wobei in der Standby-Periode (71) die an den piezoelektrischen Körper (12) angelegte Spannung:
- schrittweise von der zweiten Spannung (V1) auf die erste Spannung (V2) verringert wird, und/oder
- linear von der zweiten Spannung (V1) auf die erste Spannung (V2) verringert wird, und/oder
- exponentiell von der zweiten Spannung (V1) auf die erste Spannung (V2) verringert wird.

7. Verfahren nach einem der Ansprüche 1 bis 6, wobei der piezoelektrische Körper (12) einen piezoelektrischen Körperfilm mit einer Dicke von 5 µm oder weniger umfasst.

8. Verfahren nach einem der Ansprüche 1 bis 7, wobei der piezoelektrische Körper (12) einen piezoelektrischen Körperfilm mit einer Dicke von 2 µm bis 5 µm umfasst.

9. Verfahren nach einem der Ansprüche 1 bis 8, wobei der piezoelektrische Körper (12) einen piezoelektrischen Körperfilm umfasst und wobei die erste Spannung (V2) auf einen Wert eingestellt wird, der die Lebensdauer des piezoelektrischen Körperfilms im Wesentlichen nicht beeinflusst, oder auf einen Wert eingestellt wird, der im Wesentlichen kein Zusammenziehen des piezoelektrischen Körperfilms verursacht.

10. Verfahren nach einem der Ansprüche 1 bis 9, wobei das Verfahren nicht das kontinuierliche Anlegen einer Vorspannung an den piezoelektrischen Körper (12) in der Ruheperiode umfasst.

11. Verfahren nach einem der Ansprüche 1 bis 10, wobei das Verfahren nicht das kontinuierliche Erzeugen eines elektrischen Feldes in dem piezoelektrischen Körper (12) in der Ruheperiode umfasst.

12. Flüssigkeitseinspritzeinrichtung (2), umfassend:
eine Grundplatte (3), auf der eine Druckkammer (18) ausgebildet ist, die mit einer Düse (17) in Verbindung steht, die Flüssigkeit ausstößt;
einen piezoelektrischen Körper, der in Übereinstimmung mit der Druckkammer angeordnet und konfiguriert ist, sich durch Anlegen einer Spannung in einer Richtung zusammenzuziehen, die orthogonal zu einer Dickenrichtung ist;
eine volumenvariable Platte, die zwischen der Druckkammer (18) und dem piezoelektrischen Körper angeordnet und konfiguriert ist, um ein Volumen der Druckkammer (18) durch Anlegen einer Spannung an den piezoelektrischen Körper zu ändern; und
eine Ansteuerungsschaltung, die konfiguriert ist zum
Erzeugen eines elektrischen Signals, das eine erste Spannung (V2) in einem Ruhezustand, bevor die Flüssigkeit aus der Düse ausgestoßen wird, eine zweite Spannung (V1) in einem Standby-Zustand, die höher ist als die erste Spannung (V2), zum Zusammenziehen des piezoelektrischen Körpers (12), bevor die Flüssigkeit aus der Düse ausgestoßen wird, und eine dritte Spannung umfasst, die niedriger als die zweite Spannung (V1) ist, zum Ausstoßen der Flüssigkeit aus der Düse, wobei die Ruheperiode (71) vor der Standby-Periode (72) angeordnet ist, und
Umschalten der ersten Spannung, der zweiten Spannung (V1) und der dritten Spannung und Anlegen dieser an den piezoelektrischen Körper (12) gemäß Ausstoßdaten, die angeben, ob die Flüssigkeit ausgestoßen werden soll.

13. Flüssigkeitseinspritzeinrichtung (2) nach Anspruch 12, wobei
die Ansteuerschaltung ein Signal zum Umschalten der ersten Spannung, der zweiten Spannung und der dritten Spannung basierend auf den Ausstoßdaten erzeugt und die erste Spannung, die zweite Spannung und die dritte Spannung gemäß dem Schaltsignal umschaltet, und wobei die erste Spannung (V2) 0 ist.

14. Flüssigkeitseinspritzeinrichtung (2) nach Anspruch 12 oder 13, wobei
wenn die natürliche Schwingungsperiode der Flüssigkeit in der Druckkammer (18) auf λ eingestellt ist, eine Spannung zwischen der ersten Spannung (V2) und der zweiten Spannung (V1) für eine Periode von λ/2 beim Umschalten von der ersten Spannung (V2) im Ruhezustand auf die zweite Spannung (V1) im Standby-Zustand aufrechterhalten wird.

15. Flüssigkeitsversorgungseinrichtung (100), umfassend:
eine Flüssigkeitseinspritzeinrichtung (2) nach einem der Ansprüche 12 bis 14; einen Speicher (51), der zum Speichern der Ausstoßdaten konfiguriert ist;
eine Steuerschaltung (53), die konfiguriert ist, ein Signal zum Umschalten der ersten Spannung (V2), der zweiten Spannung (V1) und der dritten Spannung basierend auf den in dem Speicher (51) gespeicherten Ausstoßdaten zu erzeugen; und
eine Fördervorrichtung (165), die konfiguriert ist, ein Medium zum Aufnehmen der aus der Flüssigkeitseinspritzeinrichtung (2) ausgestoßenen Flüssigkeit zu befördern.

## Revendications

1. Procédé d'entraînement d'un appareil d'injection de liquide (2) comprenant une plaque de base (3) sur laquelle une chambre de pression (18) communiquant avec une buse (17) qui éjecte du liquide est formée, un corps piézoélectrique (12) disposé en correspondance avec la chambre de pression (18) et se contractant dans une direction orthogonale par rapport à une direction d'épaisseur en appliquant une tension, et une plaque de volume variable (13) disposée entre la chambre de pression (18) et le corps piézoélectrique (12) et modifiant un volume de la chambre de pression (18) en appliquant une tension sur le corps piézoélectrique (12), le procédé comprenant :
1) l'application d'une première tension (V2) sur le corps piézoélectrique (12) en période de repos (71) avant que le liquide soit éjecté de la buse (17) ;
2) l'application d'une deuxième tension (V1) supérieure à la première tension (V2) sur le corps piézoélectrique (12) pour réduire le volume de la chambre de pression (18) en contractant le corps piézoélectrique (12) en période de veille (72) avant que le liquide soit éjecté de la buse, dans lequel la période de repos (71) est disposée avant la période de veille (72) ;
3) l'application de la deuxième tension (V1) sur le corps piézoélectrique (12) après l'application d'une troisième tension (V3) inférieure à la deuxième tension (V1) sur le corps piézoélectrique (12), en période d'impression (73), pour éjecter le liquide de la buse (17) ; et
la commutation de la première étape, de la deuxième étape et de la troisième étape selon les données d'éjection indiquant s'il faut ou non éjecter le liquide.

2. Procédé selon la revendication 1, dans lequel la première tension (V2) est 0.

3. Procédé selon la revendication 1 ou 2, dans lequel en période d'impression (73) la tension appliquée sur le corps piézoélectrique (12) passe de la deuxième tension (V1) à la troisième tension et ensuite de la troisième tension à la deuxième tension.

4. Procédé selon l'une quelconque des revendications 1 à 3, dans lequel après que le liquide est éjecté de la buse, le procédé revient à la période de repos (71) dans laquelle la première tension (V2) est appliquée.

5. Procédé selon l'une quelconque des revendications 1 à 4, dans lequel en période de veille (72) la tension appliquée sur le corps piézoélectrique (12) est :
- augmentée progressivement de la première tension (V2) à la deuxième tension, et/ou
- augmentée linéairement de la première tension (V2) à la deuxième tension, et/ou
- augmentée exponentiellement de la première tension (V2) à la deuxième tension.

6. Procédé selon l'une quelconque des revendications 1 à 5, dans lequel en période de repos (71) la tension appliquée sur le corps piézoélectrique (12) est :
- diminuée progressivement de la deuxième tension (V1) à la première tension (V2), et/ou
- diminuée linéairement de la deuxième tension (V1) à la première tension (V2), et/ou
- diminuée exponentiellement de la deuxième tension (V1) à la première tension (V2).

7. Procédé selon l'une quelconque des revendications 1 à 6, dans lequel le corps piézoélectrique (12) comprend un film de corps piézoélectrique présentant une épaisseur de 5 µm ou moins.

8. Procédé selon l'une quelconque des revendications 1 à 7, dans lequel le corps piézoélectrique (12) comprend un film de corps piézoélectrique présentant une épaisseur de 2 µm à 5 µm.

9. Procédé selon l'une quelconque des revendications 1 à 8, dans lequel le corps piézoélectrique (12) comprend un film de corps piézoélectrique, et dans lequel la première tension (V2) est réglée à une valeur qui n'affecte pas sensiblement la durée de vie du film de corps piézoélectrique ou à une valeur qui ne provoque pas sensiblement une contraction du film de corps piézoélectrique.

10. Procédé selon l'une quelconque des revendications 1 à 9, dans lequel le procédé ne comprend pas l'application continue d'une tension de polarisation sur le corps piézoélectrique (12) en période de repos.

11. Procédé selon l'une quelconque des revendications 1 à 10, dans lequel le procédé ne comprend pas la génération en continu d'un champ électrique dans le corps piézoélectrique (12) en période de repos.

12. Appareil d'injection de liquide (2), comprenant :
une plaque de base (3) sur laquelle une chambre de pression (18) communiquant avec une buse (17) qui éjecte du liquide est formée ;
un corps piézoélectrique, disposé en correspondance avec la chambre de pression, configuré pour se contracter dans une direction orthogonale à une direction d'épaisseur en appliquant une tension ;
une plaque de volume variable, disposée entre la chambre de pression (18) et le corps piézoélectrique, configurée pour modifier un volume de la chambre de pression (18) en appliquant une tension sur le corps piézoélectrique ; et
un circuit d'entraînement configuré
pour générer un signal électrique comprenant une première tension (V2) en état de repos avant que le liquide soit éjecté de la buse, une deuxième tension (V1) en état de veille qui est supérieure à la première tension (V2) pour contracter le corps piézoélectrique (12) avant que le liquide soit éjecté de la buse, et une troisième tension inférieure à la deuxième tension (V1) pour éjecter le liquide de la buse, la période de repos (71) étant disposée avant la période de veille (72), et
pour commuter la première tension, la deuxième tension (V1) et la troisième tension et pour les appliquer sur le corps piézoélectrique (12) en fonction des données d'éjection indiquant s'il faut ou non éjecter le liquide.

13. Appareil d'injection de liquide (2) selon la revendication 12, dans lequel
le circuit d'entraînement génère un signal pour commuter la première tension, la deuxième tension et la troisième tension sur la base des données d'éjection, et commute la première tension, la deuxième tension et la troisième tension en fonction du signal de commutation, et dans lequel la première tension (V2) est 0.

14. Appareil d'injection de liquide (2) selon la revendication 12 ou 13, dans lequel
lorsque la période de vibration naturelle du liquide dans la chambre de pression (18) est réglée sur λ, une tension entre la première tension (V2) et la deuxième tension (V1) est maintenue pendant une période de λ/2 lors de la commutation de la première tension (V2) à l'état de repos à la deuxième tension (V1) à l'état de veille.

15. Appareil d'alimentation en liquide (100), comprenant :
un appareil d'injection de liquide (2) selon l'une quelconque des revendications 12 à 14 ; une mémoire (51) configurée pour stocker les données d'éjection ;
un circuit de commande (53) configuré pour générer un signal pour commuter la première tension (V2), la deuxième tension (V1) et la troisième tension sur la base des données d'éjection stockées dans la mémoire (51) ; et
un dispositif de transport (165) configuré pour transporter un support pour recevoir le liquide éjecté de l'appareil d'injection de liquide (2).
